# EUROPÄISCHE PATENTSCHRIFT

(11) **EP 2 357 375 B1**
(45) Veröffentlichungstag und Bekanntmachung des Hinweises auf die Patenterteilung: **29.07.2015**
(21) Anmeldenummer: 11000848.9
(22) Anmeldetag: 03.02.2011
(51) Int. Cl.: F16D 43/18

(54) **Fliehkraftbetätigte Koppeleinrichtung**
Centrifugal coupling device
Dispositif de couplage actionné par la force centrifuge

(30) Priorität: 17.02.2010 DE 102010008244
(43) Veröffentlichungstag der Anmeldung: 17.08.2011
(73) Patentinhaber: Andreas Stihl AG & Co. KG, 71336 Waiblingen (DE)
(72) Erfinder: Engel, Bernd, 70193 Stuttgart (DE); Zürcher, Lukas, Dr., 70192 Stuttgart (DE)
(74) Vertreter: Reinhardt, Annette

(56) Entgegenhaltungen:
- EP-A1- 0 808 429
- DE-A1- 3 125 444
- DE-U1- 8 903 848
- US-A- 2 514 228
- US-A- 4 892 175
- US-A1- 2007 251 743

## Beschreibung

Die Erfindung betrifft eine fliehkraftbetätigte Koppeleinrichtung der im Oberbegriff des Anspruchs 1 angegebenen Gattung.

Aus der DE 94 11 945 U1 ist eine fliehkraftbetätigte Koppeleinrichtung, nämlich eine Fliehkraftkupplung bekannt, bei der ein Halter zur Sicherung der axialen Lage der Fliehgewichte vorgesehen ist. Der Halter überdeckt auch die Federn teilweise in axialer Richtung.

Bei einem Federbruch muss vermieden werden, dass die Feder aus dem Bereich der Fliehkraftkupplung ausschwenkt und mit benachbarten Teilen in Kontakt kommt und diese beschädigt oder zerstört. Hierzu ist es bekannt, die gesamte Kupplung an der der Kupplungstrommel gegenüberliegenden Seite von einer Scheibe abzudecken.

Beim Einsatz der Fliehkraftkupplung in handgeführten Arbeitsgeräten wie Motorsägen, Freischneidern oder dgl. soll zum einen das Gewicht der Fliehkraftkupplung möglichst klein und zum anderen die Baugröße in axialer Richtung möglichst gering sein.

Aus der DE 89 03 848 U1 ist eine Fliehkraftkupplung bekannt, bei der benachbarte Fliehgewichte über Schraubenzugfedern miteinander verbunden sind. Die Fliehgewichte weisen in der Oberfläche des Reibabschnitts einen Einschnitt auf, an dem die Federn eingehängt sind. Dabei sind die Federenden der Feder so angeordnet, dass ein Schenkel der Feder ein Fliehgewicht auf einer Seite und der andere Schenkel ein anderes Fliehgewicht auf der anderen Seite übergreift.

Aus der US 2007/0251743 A1 ist eine fliehkraftbetätigte Koppeleinrichtung bekannt, bei der die Fliehgewichte sich zu einer außenliegenden Kupplungstrommel hin über Schraubendruckfedern abstützen, die jeweils in einer Vertiefung der Fliehgewichte angeordnet sind.

Der Erfindung liegt die Aufgabe zugrunde, eine fliehkraftbetätigte Koppeleinrichtung der gattungsgemäßen Art zu schaffen, die einen einfachen Aufbau und ein geringes Gewicht besitzt.

Diese Aufgabe wird durch eine fliehkraftbetätigte Koppeleinrichtung mit den Merkmalen des Anspruchs 1 gelöst.

Dadurch, dass das Sicherungselement einteilig mit dem Fliehgewicht ausgebildet ist, kann es klein ausgebildet sein. Gegenüber Koppeleinrichtungen mit separater Scheibe zur axialen Sicherung verringert sich die Baubreite, und das Gewicht der Sicherungsscheibe kann eingespart werden. Der Aufbau der Koppeleinrichtung ist vereinfacht, da für das Sicherungselement keine zusätzlichen Bauteile benötigt werden. Eine Falschmontage des Sicherungselements, die bei separater Ausbildung des Sicherungselements möglich ist, ist ausgeschlossen. Die Montage ist vereinfacht, da weniger Bauteile montiert werden müssen.

Vorteilhaft sichert das Sicherungselement mindestens eine Feder in Richtung der Drehachse. Das Sicherungselement dient dabei insbesondere dazu, die Feder bei Beschädigung oder Bruch an der Fliehkraftkupplung zu halten und ein seitliches Auslenken oder Herausfallen zu verhindern. Die Feder ist vorteilhaft über einen Teil ihrer Länge in einer Aufnahme am Fliehgewicht angeordnet. Vorteilhaft besitzt die Aufnahme an ihrer radial innenliegenden Seite und an ihrer radial außenliegenden Seite ein Sicherungselement für die Feder. Der Abstand zwischen den Sicherungselementen ist dabei vorteilhaft kleiner als der Außendurchmesser der Feder. Dadurch kann auf einfache Weise verhindert werden, dass die Feder bei Federbruch seitlich ausgelenkt werden kann. Die Sicherungselemente sind dabei vorteilhaft an der einer Kupplungstrommel gegenüberliegenden Seite des Fliehgewichts angeordnet, da ein Auslenken der Feder zu der der Kupplungstrommel zugewandten Seite durch die Kupplungstrommel selbst vermieden ist.

Eine einfache Gestaltung ergibt sich, wenn das Sicherungselement als benachbart zum Umfang der Feder angeordnete, keilförmig ausgebildete Haltenase ausgebildet ist. Die Haltenase kann sehr klein ausgebildet sein. Sie verengt lediglich die Aufnahme so, dass die Feder oder Bruchstücke der Feder nicht herausfallen können. Die Baugröße in axialer Richtung wird durch das Sicherungselement nicht vergrößert, so dass gegenüber bekannten Anordnungen Bauraum eingespart werden kann.

Vorteilhaft sind mindestens zwei Fliehgewichte vorgesehen, wobei die Feder als Schraubenzugfeder ausgebildet und mit ihren Enden an benachbarten Fliehgewichten eingehängt ist. Zwischen den Fliehgewichten ist dabei vorteilhaft ein von der Feder überbrückter Zwischenraum gebildet. Vorteilhaft ist mindestens ein radiales Sicherungselement vorgesehen, das einteilig mit einem Fliehgewicht ausgebildet ist, und das an der radial außenliegenden Seite der Feder benachbart zur Feder in den Zwischenraum ragt. Dadurch kann auch ein Herausfallen eines abgebrochenen Federabschnitts radial nach außen auf einfache Weise verhindert werden. Vorteilhaft ragen zwei radiale Sicherungselemente von benachbarten Fliehgewichten aufeinander zu. Der Abstand zwischen den Sicherungselementen ist dabei insbesondere so bemessen, dass er im Ruhezustand der Koppeleinrichtung etwa das 0,5fache bis etwa das 2fache des Drahtdurchmessers der Feder beträgt. Dadurch kann verhindert werden, dass sich benachbarte Fliehgewichte auch bei ungünstigen Fertigungstoleranzen berühren. Gleichzeitig kann verhindert werden, dass Bruchstücke der Feder radial nach außen entweichen. Da die Sicherungselemente vergleichsweise klein ausgebildet sein können, ergibt sich nur eine geringfügige Erhöhung des Gesamtgewichts. Verglichen mit bekannten Sicherungsanordnungen ist das Gesamtgewicht der Kupplungsanordnung verringert.

Um insgesamt geringe Abmessungen der Kupplungseinrichtung zu erreichen, ist vorgesehen, dass der Außendurchmesser der Feder mindestens der Dicke des Fliehgewichts entspricht. Die Fliehgewichte sind demnach so schmal ausgebildet, dass sie seitlich nicht über die Feder hinausstehen. Die Breite der Kupplungseinrichtung wird vom Durchmesser der benötigten Feder bestimmt.

Vorteilhaft sichert ein Sicherungselement die Lage des Fliehgewichts an dem Halter in Richtung der Drehachse. Bei bekannten Fliehkraftkupplungen sind hierzu separate Halter vorgesehen. Die Halter stellen zusätzliche Bauteile dar, die den Aufbau der Kupplungseinrichtung verkomplizieren und das Gewicht erhöhen. Eine einfache Gestaltung ergibt sich, wenn das Sicherungselement an dem Fliehgewicht als Führungssteg ausgebildet ist, der in eine in dem Halter ausgebildete Führungsnut ragt. Dadurch kann das Fliehgewicht gegenüber dem Halter in beide Richtungen axial gesichert werden. Insbesondere ist die Führungsnut an dem Führungsstutzen des Halters ausgebildet und der Führungssteg ist einteilig mit dem Fliehgewicht ausgebildet und ragt in den Führungsschlitz des Fliehgewichts.

Vorteilhaft ist das Fliehgewicht aus Metall. Insbesondere ist mindestens ein Sicherungselement an dem Fliehgewicht angesintert. Dadurch kann das Sicherungselement mit dem Fliehgewicht in einem gemeinsamen Herstellungsverfahren hergestellt werden. Separate Herstellschritte für die Herstellung des Sicherungselements werden nicht benötigt. Ein vorteilhafter Aufbau ergibt sich, wenn drei Fliehgewichte vorgesehen sind, die über drei Federn miteinander verbunden sind.

Die Koppeleinrichtung ist insbesondere eine Fliehkraftkupplung, die eine Kupplungstrommel besitzt, an der die Fliehgewichte in der radial außenliegenden Stellung anliegen. Die Koppeleinrichtung kann jedoch auch eine fliehkraftbetätigte Bremseinrichtung oder dgl. sein.

Ein Ausführungsbeispiel der Erfindung wird im Folgenden anhand der Zeichnung erläutert. Es zeigen:
- Fig. 1: eine Seitenansicht einer Fliehkraftkupplung,
- Fig. 2: einen Schnitt entlang der Linie II-II in Fig. 1,
- Fig. 3: eine perspektivische Darstellung der Fliehkraftkupplung ohne Kupplungstrommel,
- Fig. 4: einen Schnitt entlang der Linie IV-IV in Fig. 1 ohne die Kupplungstrommel,
- Fig. 5: einen Schnitt entlang der Linie V-V in Fig. 1 ohne die Kupplungstrommel,
- Fig. 6: eine Seitenansicht der Fliehkraftkupplung ohne Kupplungstrommel in Richtung des Pfeils VI in Fig. 1,
- Fig. 7: einen Schnitt entlang der Linie VII-VII in Fig. 6,
- Fig. 8: eine perspektivische Darstellung eines Fliehgewichts,
- Fig. 9: eine Seitenansicht des Fliehgewichts aus Fig. 8,
- Fig. 10: einen Schnitt entlang der Linie X-X in Fig. 9,
- Fig. 11 1: einen Schnitt entlang der Linie XI-XI in Fig. 9,
- Fig. 12: eine Seitenansicht in Richtung des Pfeils XII in Fig. 10,
- Fig. 13 3: einen Schnitt entlang der Linie XIII-XIII in Fig. 12,
- Fig. 14: einen Schnitt entlang der Linie XIV-XIV in Fig. 12,
- Fig. 15 5: eine perspektivische Darstellung eines Halters der Fliehkraftkupplung,
- Fig. 16: eine Seitenansicht des Halters,
- Fig. 17: einen Schnitt entlang der Linie XVII-XVII in Fig. 16,
- Fig. 18: einen Schnitt entlang der Linie XVIII-XVIII in Fig. 17,
- Fig. 19: einen Schnitt entlang der Linie XIX-XIX in Fig. 18.

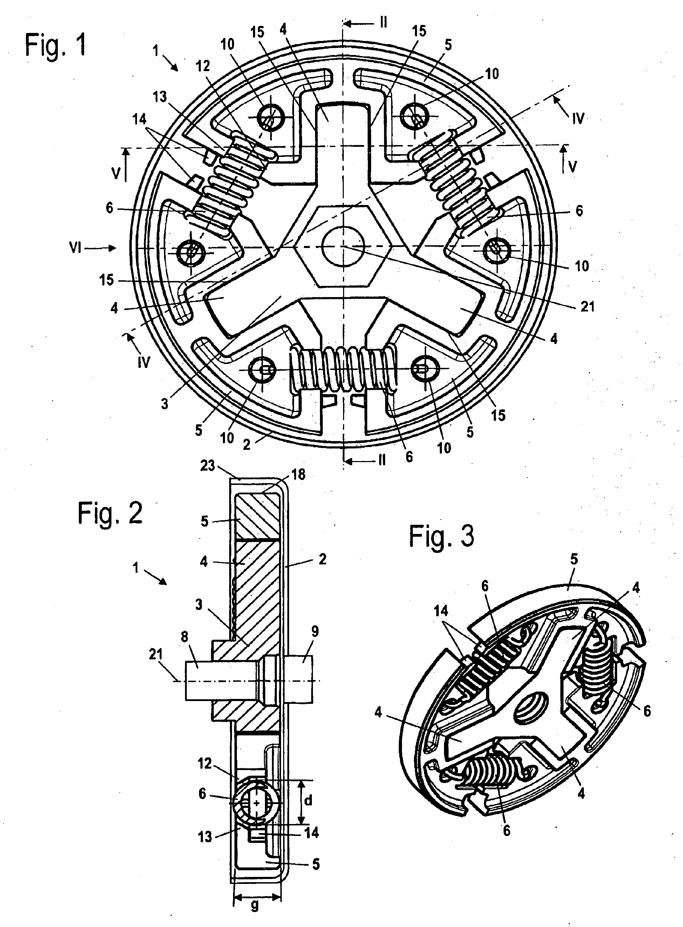

Fig. 1 zeigt als Ausführungsbeispiel für eine fliehkraftbetätigte Koppeleinrichtung eine Fliehkraftkupplung 1. Anstatt der Fliehkraftkupplung 1 kann auch eine fliehkraftbetätigte Bremseinrichtung oder dgl. vorgesehen sein. Die Fliehkraftkupplung 1 ist vorteilhaft im Antriebsstrang in einem handgeführten Arbeitsgerät wie einer Motorsäge, einem Trennschleifer, einem Freischneider oder dgl. zwischen dem Antriebsmotor und dem anzutreibenden Werkzeug angeordnet und verbindet das Werkzeug drehfest mit der Antriebswelle des Motors, wenn eine konstruktiv vorgegebene Einkuppeldrehzahl überschritten ist. Im Leerlauf des Antriebsmotors, der insbesondere als Verbrennungsmotor ausgebildet ist, ist der Motor üblicherweise vom Werkzeug getrennt. Die Fliehkraftkupplung 1 besitzt einen Halter 3, der, wie in Fig. 2 schematisch gezeigt ist, drehfest mit einer Antriebswelle 8 verbunden ist. Der Halter 3 besitzt drei radial nach außen ragende Führungsstutzen 4, an denen jeweils ein Fliehgewicht 5 angeordnet ist. Die drei identisch zueinander ausgebildeten Fliehgewichte 5 besitzen jeweils zwei Einhängeöffnungen 10 für Federn 6. Jede Feder ist mit ihren Enden in in Umfangsrichtung benachbarte Fliehgewichte 5 eingehängt.

Die Fliehkraftkupplung 1 besitzt eine Kupplungstrommel 2, deren Rand 23 die Fliehgewichte 5 an ihrem radial außenliegenden Bereich übergreift. In der in den Figuren 1 und 2 gezeigten Ruhestellung ziehen die Federn 6 die Fliehgewichte 5 in ihre radial innenliegende Stellung. Wird die Antriebswelle 8 rotierend um eine Drehachse 21, die gleichzeitig die Symmetrieachse der Fliehkraftkupplung 1 darstellt, angetrieben, so wirkt die Fliehkraft auf die Fliehgewichte 5 radial nach außen entgegen der Kraft der Federn 6. Die Fliehgewichte 5 werden bei Überschreiten einer konstruktiv vorgegebenen Drehzahl radial nach außen ausgelenkt und kommen mit ihrer Reibfläche 18 in Kontakt mit dem Rand 23. Dadurch wird die Antriebswelle 8 reibschlüssig mit der Kupplungstrommel 2 verbunden. An der Kupplungstrommel 2 ist drehfest eine Abtriebswelle 9 festgelegt, die in Fig. 2 schematisch gezeigt ist.

Bricht im Betrieb eine der Federn 6, so muss verhindert werden, dass sich die Feder 6 bei der Darstellung in Fig. 2 nach links über die Fliehkraftkupplung 1 herausstellt und so benachbarte Bauteile beschädigt oder zerstört. Um die Feder 6 auch bei einem Federbruch sicher an der Fliehkraftkupplung 1 zu halten, sind an den Fliehgewichten 5 benachbart zur Feder 6 Haltenasen 12 und 13 angeformt. Dabei sind die Haltenasen 12 radial innenliegend und die Haltenasen 13 radial außenliegend bezogen auf die Drehachse 21 vorgesehen. Um zu verhindern, dass die Feder 6 in radialer Richtung heraustreten kann, sind radiale Haltenasen 14 an den Fliehgewichten 5 angeformt. Die Gestaltung der Haltenasen 12, 13 und 14 wird im Folgenden noch näher erläutert.

Wie Fig. 2 zeigt, ist die Fliehkraftkupplung 1 vergleichweise schmal ausgebildet. Die Dicke g der Fliehgewichte 5, die parallel zur Drehachse 21 gemessen ist, ist im Ausführungsbeispiel etwas kleiner als der Außendurchmesser d der Feder 6. Ein Anordnen der Feder 6 in einer Aufnahme, die zu der der Kupplungstrommel 2 abgewandt liegenden Seite der Fliehkraftkupplung 1 geschlossen ausgebildet ist, ist deshalb bei gleicher Baubreite der Fliehkraftkupplung 1 nicht möglich.

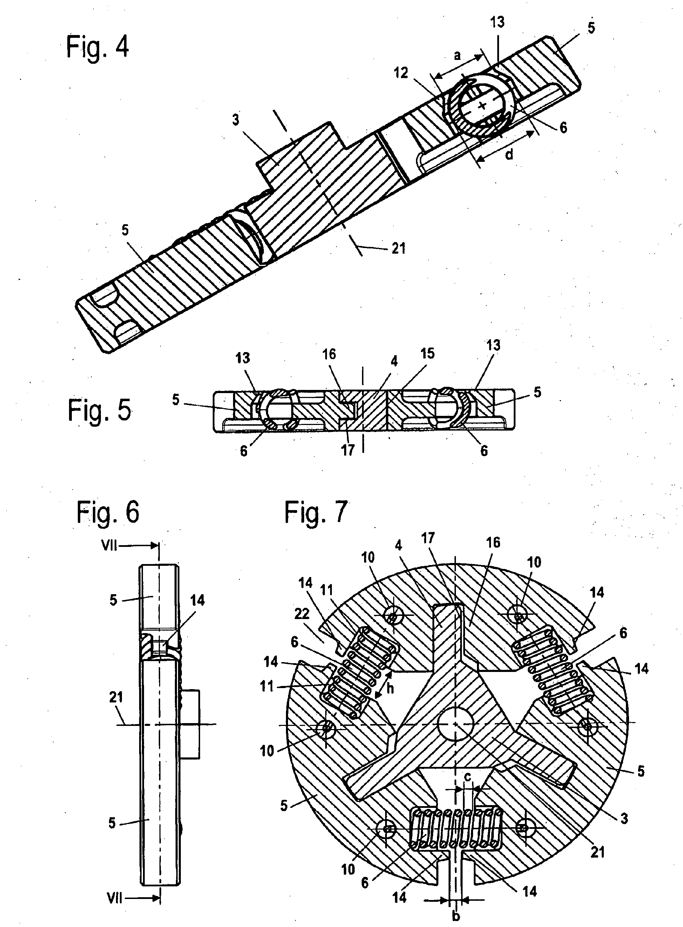

Die Figuren 3 bis 7 zeigen die Gestaltung der Fliehkraftkupplung 1 im Einzelnen. Wie Fig. 4 zeigt, sind die Haltenasen 12 und 13 etwa keilförmig ausgebildet. Die Haltenasen 12 und 13 besitzen zueinander einen Abstand b (Fig. 7), der kleiner als der Außendurchmesser d der Feder 6 ist. Wie Fig. 6 zeigt, sind die radialen Haltenasen 14 als im mittleren Bereich der Fliehgewichte 5 angeordnete Stege ausgebildet, die sich über weniger als die Hälfte der Dicke g der Fliehgewichte 5 erstrecken. Dies ist zum Zurückhalten der Federn 6 ausreichend.

Wie Fig. 7 zeigt, besitzen die Fliehgewichte 5 jeweils zwei Aufnahmen 11, in denen ein Endabschnitt der Federn 6 angeordnet werden kann. Die Aufnahmen 11 sind dabei etwa tangential zur Drehachse 21 ausgerichtet, so dass auch die Federn 6 tangential zu einer Umfangsrichtung zur Drehachse 21 angeordnet sind. Die Aufnahmen 11 benachbarter Fliehgewichte 5 liegen einander zugewandt, so dass jede Feder 6 mit einem ersten Ende an einem Fliehgewicht 5 und mit einem zweiten Ende an einem benachbarten Fliehgewicht 5 angeordnet werden kann. Zwischen benachbarten Fliehgewichten 5 ist jeweils ein Zwischenraum 22 gebildet, der eine Breite h besitzt. In diesen Zwischenraum 22 ragen die radialen Haltenasen 14. Der Zwischenraum 22 ist von den Federn 6 überbrückt. Wie Fig. 7 zeigt, besitzen die Haltenasen 14 im Ruhezustand einen Abstand b zueinander, der im Ausführungsbeispiel geringfügig größer als der Drahtdurchmesser c der als Schraubenzugfeder ausgebildeten Feder 6 ist. Der Abstand b beträgt vorteilhaft etwa die Hälfte bis etwa das Doppelte des Drahtdurchmessers c.

Die Fliehkraftkupplung 1 besitzt außerdem eine Sicherungseinrichtung, die die Lage der Fliehgewichte 5 an dem Halter 4 in Richtung der Drehachse 21 sichert. Wie die Figuren 1 und 5 zeigen, ragen die Führungsstutzen 4 des Halters 3 in Führungsschlitze 15 der Fliehgewichte S. Die Führungsschlitze 1 sind radial zur Drehachse 21 ausgerichtet. Die Führungsschlitze 15 können zur radialen Richtung der Drehachse 21 jedoch auch geneigt oder gebogen ausgebildet sein. In die Führungsschlitze 15 ragt ein Führungssteg 16, der sich in Längsrichtung der Führungsschlitze 15 erstreckt und der mittig in den Führungsschlitz 15 ragt. Der Führungssteg 16 ist deutlich schmaler ausgebildet als das Fliehgewicht 5. Der Führungssteg 16 wird vom Führungsstutzen 4 des Halters 3 beidseitig umgriffen. Zur Aufnahme des Führungsstegs 16 besitzt der Führungsstutzen 4 eine Führungsnut 17, in die der Führungssteg 16 ragt. Dadurch ist die Lage der Fliehgewichte 5 gegenüber dem Halter 4 in Richtung der Drehachse 21 gesichert.

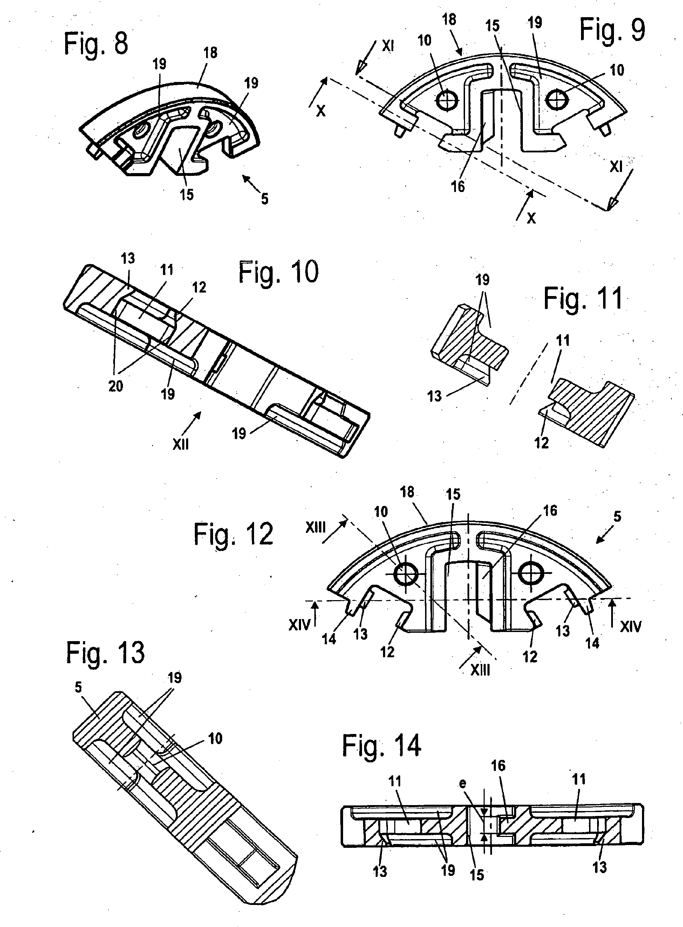

Die Figuren 8 bis 14 zeigen die Gestaltung des Fliehgewichts 5 im Einzelnen. Wie Fig. 10 zeigt, besitzt die Aufnahme 11 für die Feder 6 Seitenwände 20, die etwa parallel zur Drehachse 21 verlaufen. Die keilförmigen Haltenasen 12 und 13 erstrecken sich von den Seitenwänden 20 in die Aufnahme 11. Wie die Figuren zeigen, besitzt das Fliehgewicht 5 an beiden Seiten Vertiefungen 19, die sich jeweils über etwa ein Drittel der Dicke des Fliehgewichts 5 erstrecken. Nur im Bereich des Führungsschlitzes 15 erstreckt sich das Fliehgewicht 5 über die gesamte Breite. Im Bereich der Aufnahmen 11 und der Einhängeöffnungen 10 erstrecken sich die Vertiefungen 19, so dass sich in diesen Bereichen eine geringere Dicke des Fliehgewichts 5 und damit ein geringeres Gesamtgewicht der Fliehkraftkupplung 1 ergibt. Wie Fig. 12 zeigt, erstreckt sich der Führungssteg 16 über annähernd die gesamte Tiefe des Führungsschlitzes 15. Im Ausführungsbeispiel ist nur auf einer Seite des Führungsschlitzes 15 ein Führungssteg 16 vorgesehen, auch die Anordnung von zwei Führungsstegen auf den gegenüberliegenden Seiten des Führungsschlitzes 15 ist jedoch möglich.

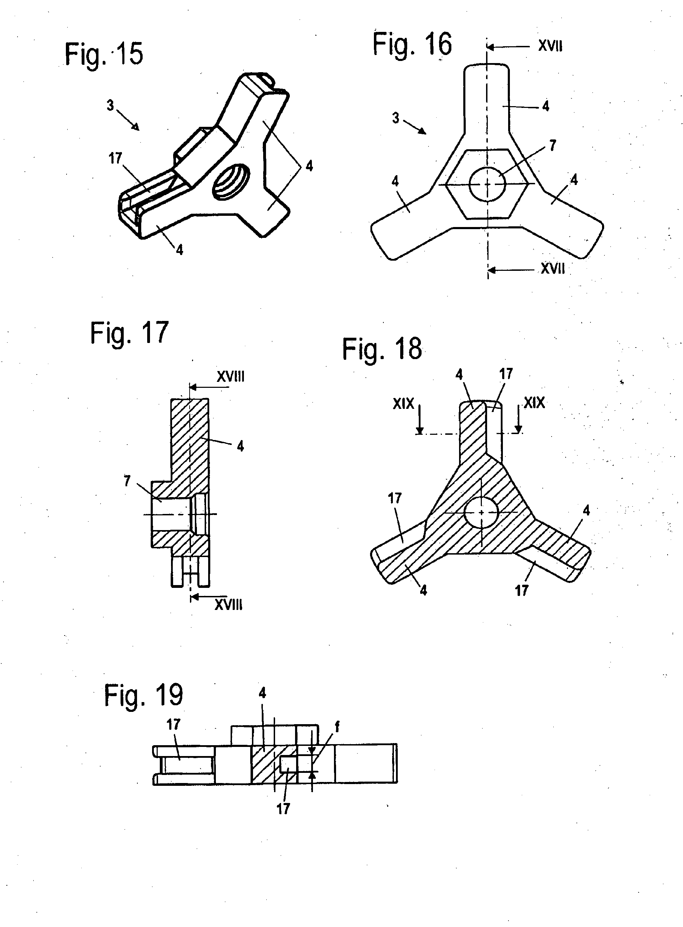

Wie Fig. 14 zeigt, besitzt der Führungssteg 16 eine Breite e. Die Breite e entspricht etwa der in Fig. 19 gezeigte Breite f der Führungsnut 17. Die Breiten e und f betragen vorteilhaft etwa ein Viertel bis etwa zwei Drittel der Dicke g der Fliehgewichte 5. Dadurch ergibt sich eine gute Führung in axialer Richtung. Wie die Figuren 15 bis 19 zeigen, die den Halter 3 im Einzelnen zeigen, sind die Führungsnuten 17 jeweils an der gleichen Seite der Führungsstutzen 4 des Halters 3 vorgesehen, so dass sich eine rotationssymmetrische Gestalt des Halters 3 ergibt. Wie Fig. 16 außerdem zeigt, besitzt der Halter 3 eine Aufnahme 7 für die Antriebswelle 8.

Die Fliehgewichte 5 sind vorteilhaft ebenso wie der Halter 3 und die Kupplungstrommel 2 aus Metall. Die Fliehgewichte 5 sind vorteilhaft in einem Sinterverfahren hergestellt, wobei die Haltenasen 12, 13 und 14 an den Fliehgewichten 5 angesintert sind. Zusätzliche Bauteile zur axialen Sicherung der Fliehgewichte 5 oder der Federn 6 können durch die Haltenasen 12, 13 und 14 entfallen.

## Patentansprüche

1. Fliehkraftbetätigte Koppeleinrichtung mit mindestens zwei an einem Halter (3) radial beweglich gelagerten, benachbarten Fliehgewichten (5), wobei die Fliehgewichte (5) zwischen einer radial innenliegenden und einer radial außenliegenden Stellung beweglich sind, mit mindestens einer Feder (6), die die Fliehgewichte (5) in Richtung auf die radial innenliegende Stellung belastet, wobei die Feder (6) als Schraubenzugfeder ausgebildet und mit ihren Enden an den Fliehgewichten (5) eingehängt ist, wobei die Koppeleinrichtung um eine Drehachse (21) drehbar angeordnet ist und wobei die Koppeleinrichtung mindestens ein Sicherungselement umfasst, das die Feder (6) in Richtung der Drehachse (21) sichert,
**dadurch gekennzeichnet, dass** das Sicherungselement, das die Feder (6) in Richtung der Drehachse (21) sichert, einteilig mit dem Fliehgewicht ausgebildet ist.

2. Koppeleinrichtung nach Anspruch 1,
**dadurch gekennzeichnet, dass** die Feder (6) über mindestens einen Teil ihrer Länge in einer Aufnahme (11) am Fliehgewicht (5) angeordnet ist.

3. Koppeleinrichtung nach Anspruch 2,
**dadurch gekennzeichnet, dass** die Aufnahme (11) an ihrer radial innenliegenden Seite und an ihrer radial außenliegenden Seite ein Sicherungselement für die Feder (6) besitzt, das die Feder (6) in Richtung der Drehachse (21) sichert.

4. Koppeleinrichtung nach Anspruch 2 oder 3,
**dadurch gekennzeichnet, dass** das Sicherungselement, das die Feder (6) in Richtung der Drehachse (21) sichert, als benachbart zum Umfang der Feder (6) angeordnete, etwa keilförmig ausgebildete Haltenase (12, 13) ausgebildet ist.

5. Koppeleinrichtung nach Anspruch 4,
**dadurch gekennzeichnet, dass** die Aufnahme (11) für die Feder (6) Seitenwände (20) besitzt, die etwa parallel zur Drehachse (21) verlaufen und dass die keilförmigen Haltenasen (12, 13) sich von den Seitenwänden (20) in die Aufnahme (11) erstrecken.

6. Koppeleinrichtung nach einem der Ansprüche 1 bis 5,
**dadurch gekennzeichnet, dass** zwischen den Fliehgewichten (5) ein von der Feder (6) überbrückter Zwischenraum (22) gebildet ist.

7. Koppeleinrichtung nach Anspruch 6,
**dadurch gekennzeichnet, dass** mindestens ein radiales Sicherungselement vorgesehen ist.

8. Koppeleinrichtung nach Anspruch 7,
**dadurch gekennzeichnet, dass** das radiale Sicherungselement an der radial außenliegenden Seite der Feder (6) benachbart zur Feder (6) in den Zwischenraum (22) ragt.

9. Koppeleinrichtung nach Anspruch 7 oder 8,
**dadurch gekennzeichnet, dass** zwei radiale Sicherungselemente von benachbarten Fliehgewichten (5) aufeinander zu ragen, wobei der Abstand (b) zwischen den radialen Sicherungselementen im Ruhezustand der Koppeleinrichtung etwa das 0,5fache bis etwa das 2fache des Drahtdurchmessers (c) der Feder (6) beträgt.

10. Koppeleinrichtung nach einem der Ansprüche 7 bis 9,
**dadurch gekennzeichnet, dass** mindestens ein radiales Sicherungselement an dem Fliehgewicht (5) angesintert ist.

11. Koppeleinrichtung nach einem der Ansprüche 1 bis 10,
**dadurch gekennzeichnet, dass** der Außendurchmesser (d) der Feder (6) mindestens der Dicke (g) des Fliehgewichts (5) entspricht.

12. Koppeleinrichtung nach einem der Ansprüche 1 bis 11,
**dadurch gekennzeichnet, dass** mindestens ein Sicherungselement die Lage des Fliehgewichts (5) an dem Halter (3) in Richtung der Drehachse (21) sichert.

13. Koppeleinrichtung nach Anspruch 12,
**dadurch gekennzeichnet, dass** das Fliehgewicht (5) einen etwa radial ausgerichteten Führungsschlitz (15) besitzt, in den ein Führungsstutzen (4) des Halters (3) ragt.

14. Koppeleinrichtung nach einem der Ansprüche 1 bis 13,
**dadurch gekennzeichnet, dass** das Fliehgewicht (5) aus Metall ist.

15. Köppeleinrichtung nach einem der Ansprüche 1 bis 14,
**dadurch gekennzeichnet, dass** mindestens ein Sicherungselement, das die Feder (6) in Richtung der Drehachse (21) sichert, an dem Fliehgewicht (5) angesintert ist.

16. Koppeleinrichtung nach einem der Ansprüche 1 bis 15,
**dadurch gekennzeichnet, dass** drei Fliehgewichte (5) vorgesehen sind, die über drei Federn (6) miteinander verbunden sind.

## Claims

1. Centrifugal coupling device comprising at least two adjacent flyweights (5) mounted for radial movement on a holder (3), wherein the flyweights (5) are movable between a radially inward position and a radially outward position, and further comprising at least one spring (6) which loads the flyweights (5) towards the radially inward position, wherein the spring (6) is designed as a helical tension spring and hooked into the flyweights (5) by its ends, wherein the coupling device is arranged for rotation about an axis of rotation (21) and wherein the coupling device comprises at least one securing element which secures the spring (6) in the direction of the axis of rotation (21),
**characterised in that** the securing element which secures the spring (6) in the direction of the axis of rotation (21) is designed as a single piece with the flyweight.

2. Coupling device according to claim 1,
**characterised in that** at least a part of the length of the spring (6) is located in a receptacle (11) on the flyweight (5).

3. Coupling device according to claim 2,
**characterised in that** the receptacle (11) has on its radially inward side and on its radially outward side a securing element for the spring (6), which secures the spring (6) in the direction of the axis of rotation (21).

4. Coupling device according to claim 2 or 3,
**characterised in that** the securing element which secures the spring (6) in the direction of the axis of rotation (21) is designed as an approximately wedge-shaped locating lug (12, 13) located adjacent to the circumference of the spring (6).

5. Coupling device according to claim 4,
**characterised in that** the receptacle (11) for the spring (6) has side walls (20) which extend approximately parallel to the axis of rotation (21), and **in that** the wedge-shaped locating lugs (12, 13) extend from the side walls (20) into the receptacle (11).

6. Coupling device according to any of claims 1 to 5,
**characterised in that** a space (22) bridged by the spring (6) is formed between the flyweights (5).

7. Coupling device according to claim 6,
**characterised in that** at least one radial securing element is provided.

8. Coupling device according to claim 7,
**characterised in that** the radial securing element extends into the space (22) on the radially outward side of the spring (6) adjacent to the spring (6).

9. Coupling device according to claim 7 or 8,
**characterised in that** two radial securing elements of adjacent flyweights (5) extend towards one another, the distance (b) between the radial securing elements being approximately 0.5 times to 2 times the wire diameter (c) of the spring (6) in the inactive state of the coupling device.

10. Coupling device according to any of claims 7 to 9,
**characterised in that** at least one radial securing element is sintered to the flyweight (5).

11. Coupling device according to any of claims 1 to 10,
**characterised in that** the outer diameter (d) of the spring (6) corresponds at least to the thickness (g) of the flyweight (5).

12. Coupling device according to any of claims 1 to 11,
**characterised in that** at least one securing element secures the position of the flyweight (5) on the holder (3) in the direction of the axis of rotation (21).

13. Coupling device according to claim 12,
**characterised in that** the flyweight (5) has an approximately radially oriented guide slot (15), into which a guide piece (4) of the holder (3) projects.

14. Coupling device according to any of claims 1 to 13,
**characterised in that** the flyweight (5) is made of metal.

15. Coupling device according to any of claims 1 to 14,
**characterised in that** at least one securing element which secures the spring (6) in the direction of the axis of rotation (21) is sintered to the flyweight (5).

16. Coupling device according to any of claims 1 to 15,
**characterised in that** three flyweights (5) are provided, which are connected to one another via three springs (6).

## Revendications

1. Dispositif de couplage actionné par la force centrifuge, avec au moins deux masselottes (5) voisines qui sont montées radialement mobiles sur un support (3), étant précisé que les masselottes (5) sont mobiles entre une position radialement intérieure et une position radialement extérieure, avec au moins un ressort (6) qui contraint les masselottes (5) en direction de la position radialement intérieure, étant précisé que le ressort (6) est conçu comme un ressort de traction hélicoïdal et est accroché avec ses extrémité aux masselottes (5), étant précisé que le dispositif de couplage est disposé en rotation sur un axe de rotation (21), et étant précisé que le dispositif de couplage comprend au moins un élément de blocage qui bloque le ressort (6) dans le sens de l'axe de rotation (21),
**caractérisé en ce que** l'élément de blocage qui bloque le ressort (6) dans le sens de l'axe de rotation (21) est formé d'une seule pièce avec la masselotte.

2. Dispositif de couplage selon la revendication 1,
**caractérisé en ce que** le ressort (6), sur une partie au moins de sa longueur, est disposé sur la masselotte (5) dans un logement (11).

3. Dispositif de couplage selon la revendication 2,
**caractérisé en ce que** le logement (11) comporte sur son côté radialement intérieur et sur son côté radialement extérieur un élément de blocage pour le ressort (6), qui bloque ledit ressort (6) dans le sens de l'axe de rotation (21).

4. Dispositif de couplage selon la revendication 2 ou 3,
**caractérisé en ce que** l'élément de blocage qui bloque le ressort (6) dans le sens de l'axe de rotation (21) est conçu comme une saillie de retenue (12, 13) à peu près cunéiforme qui est disposée près de la circonférence du ressort (6).

5. Dispositif de couplage selon la revendication 4,
**caractérisé en ce que** le logement (11) pour le ressort (6) comporte des parois latérales (20) qui sont à peu près parallèles à l'axe de rotation (21), et **en ce que** les saillies cunéiformes (12, 13) s'étendent à partir des parois latérales (20) dans le logement (11).

6. Dispositif de couplage selon l'une des revendications 1 à 5,
**caractérisé en ce qu'**un espace intermédiaire (22) couvert par le ressort (6) est formé entre les masselottes (5).

7. Dispositif de couplage selon la revendication 6,
**caractérisé en ce qu'**il est prévu au moins un élément de blocage radial.

8. Dispositif de couplage selon la revendication 7,
**caractérisé en ce que** l'élément de blocage radial, sur le côté radialement extérieur du ressort (6) et près du ressort (6), dépasse dans l'espace intermédiaire (22).

9. Dispositif de couplage selon la revendication 7 ou 8,
**caractérisé en ce que** deux éléments de blocage radiaux de masselottes (5) voisines dépassent l'un vers l'autre, étant précisé que la distance (b) entre les éléments de blocage radiaux, dans la position de repos du dispositif de couplage, représente environ 0,5 fois à environ 2 fois le diamètre de fil (c) du ressort (6).

10. Dispositif de couplage selon l'une des revendications 7 à 9,
**caractérisé en ce qu'**au moins un élément de blocage radial est rapporté par frittage sur la masselotte (5).

11. Dispositif de couplage selon l'une des revendications 1 à 10,
**caractérisé en ce que** le diamètre extérieur (d) du ressort (6) correspond au moins à l'épaisseur (g) de la masselotte (5).

12. Dispositif de couplage selon l'une des revendications 1 à 11,
**caractérisé en ce qu'**au moins un élément de blocage bloque la position de la masselotte (5) sur le support (3) dans le sens de l'axe de rotation (21).

13. Dispositif de couplage selon la revendication 12,
**caractérisé en ce que** la masselotte (5) comporte une fente de guidage (15) orientée à peu près radialement, dans laquelle dépasse un embout de guidage (4) du support (3).

14. Dispositif de couplage selon l'une des revendications 1 à 13,
**caractérisé en ce que** la masselotte (5) est en métal.

15. Dispositif de couplage selon l'une des revendications 1 à 14,
**caractérisé en ce qu'**au moins un élément de blocage qui bloque le ressort (6) dans le sens de l'axe de rotation (21) est rapporté par frittage sur la masselotte (5).

16. Dispositif de couplage selon l'une des revendications 1 à 15,
**caractérisé en ce qu'**il est prévu trois masselottes (5), qui sont reliées entre elles par trois ressorts (6).
